# EUROPÄISCHE PATENTANMELDUNG

(11) **EP 0 615 181 A1**
(43) Veröffentlichungstag der Anmeldung: **14.09.1994**
(21) Anmeldenummer: 94102467.1
(22) Anmeldetag: 18.02.1994
(51) Int. Cl.: G05D 13/62, D01H 5/38

(54) **Verfahren und Vorrichtung zur automatischen Einstellung der Drehzahlverhältnisse zwischen Arbeitsorganen einer Strecke**

(30) Priorität: 12.03.1993 DE 4307839
(71) Anmelder: Rieter Ingolstadt Spinnereimaschinenbau Aktiengesellschaft, 85046 Ingolstadt (DE)
(72) Erfinder: Denz, Peter, D-86558 Hohenwart (DE)

(57) **Zusammenfassung**

Aufgabe der Erfindung ist es, für eine Strecke einen Antrieb einzusetzen, der kostengünstiger ist und zugleich eine höhere Automation und Präzision zur Einstellung der Drehzahlverhältnisse zwischen dem Arbeitsorgan erreicht. Die gesamte Antriebsleistung gegenüber Arbeitsorganen einer Strecke ist zwischen einem Hauptmotor 5 und mehreren separaten Motoren 6, 7, 8, 9, 10, 11 aufgeteilt. Die Aufteilung der Antriebsleistung erfolgt so, daß der Hauptmotor 5 eine konstante Antriebsleistung liefert, die den größeren Anteil der gesamten Antriebsleistung darstellt. Alle separaten Motoren 6, 7, 8, 9, 10, 11, die wählbar veränderliche Antriebsleistung erbringen, erbringen zusammen den geringeren Anteil der gesamten Antriebsleistung. Vorrichtungsgemäß ist die mechanische Getriebekopplung aller Arbeitsorgane untereinander zugleich gekoppelt mit Einzelantrieben für alle Arbeitsorgane.

## Beschreibung

Die Erfindung betrifft die Einstellung der Drehzahlverhältnisse zwischen den Arbeitsorganen einer Strecke. Die Gewährleistung der Drehzahlverhältnisse erfolgt maßgeblich durch den Antrieb und die Transmission gegenüber den Arbeitsorganen der Strecke. Die Strecke dient dabei dem Verziehen und Strecken textilen Faserbandes.

Als Arbeitsorgane einer Strecke werden verstanden
- die Walzenpaare am Zuführgestell,
- das Walzenpaar auf dem Zuführtisch vor dem Streckwerk,
- das als Meßorgan dienende Tastwalzenpaar,
- die Walzenpaare des Streckwerks,
- das Kalanderwalzenpaar nach dem Streckwerk,
- der Drehteller,
- der Kannenteller.

Die aufgeführten Arbeitsorgane sind in einer Reihenfolge benannt, die der Transportrichtung des Faserbandmaterials entspricht. Den Schwerpunkt der Einstellung der Drehzahlverhältnisse an einer Strecke bilden die Walzenpaare des Streckwerkes, d.h. ausgehend von der Einstellung der Drehzahlverhältnisse an diesem Arbeitsorgan werden die Drehzahlverhältnisse der anderen Arbeitsorgane festgelegt. Der Schwerpunkt ist die Einstellung der Drehzahlverhältnisse zwischen den Walzenpaaren eines Streckwerkes.

Die gebräuchlichsten Streckwerke bestehen in der Regel aus mehreren Walzenpaaren zwischen denen das textile Band hindurch gefördert wird. Kennzeichnend ist, daß die häufigsten Streckwerke soviel Walzenpaare haben, daß mindestens ein Vorverzugsfeld und ein Hauptverzugsfeld gebildet werden. Der Antrieb der Walzenpaare erfolgt mit der jeweiligen Unterwalze. Dem Streckwerk vorgelagert ist ein Tastwalzenpaar und nachgelagert ist ein Kalanderwalzenpaar.

Die ursprüngliche Form des Antriebs für die Arbeitsorgane einer Strecke bestand in einem Hauptmotor, wobei die Drehzahlverhältnisse der einzelnen Arbeitsorgane zueinander über ein zwischengeschaltetes Getriebe (welches der Transmission diente) erzielt wurden. Die Drehzahlverhältnisse zwischen allen Arbeitsorganen waren somit starr eingestellt und konnten nur durch Austausch der Wechselräder des Getriebes verändert werden.

Eine Weiterentwicklung beispielsweise des Antriebes der Walzenpaare eines Streckwerkes beschreibt die EP 376 002 für ein Streckwerk mit 3 Walzenpaaren. Unter Antrieb sei deshalb nachfolgend die Einheit von Motor und Transmission zu verstehen. Infolge einer veränderten Banddicke wird das Drehzahlverhältnis zwischen Mittelwalze und Lieferwalze geändert, d.h. der Hauptverzug wird geändert und somit der veränderten Banddicke angepaßt. Die Vorrichtung hat den entscheidenden Nachteil, daß Störungen wie z.B. elektrischer Netzausfall oder auch Störungen in der Transmission zwischen Hauptmotor und Mittelwalzen bzw. Eingangswalzen zu einer Abweichung im nachfolgenden Drehzahlverhältnis zwischen Mittelwalze und Lieferwalze führen. Diese Störungen des Drehzahlverhältnisses können nicht vermieden werden. Länger dauernde Laststöße beispielsweise am Eingangswalzenpaar, ausgelöst durch kurze Dickstellen im Fasermaterial, stören die Synchronität des benannten Drehzahlverhältnisses, da sich die Rückwirkungen nicht auf alle Walzenpaare gleichmäßig auswirken, sondern nur auf das Mittel- und das Eingangswalzenpaar beschränkt bleiben. Weiterhin wirkt sich nachteilig aus, daß keine drehwinkelgetreue Positionsregelung zwischen Lieferwalzenpaar und Mittelwalzenpaar besteht. Dieser Nachteil wirkt sich bei der Stillsetzung des Streckwerkes aus. Es kommt bei der Stillsetzung des Streckwerkes zu Asynchronitäten im Drehzahlverhältnis zwischen Lieferwalzen und Mittelwalzen bedingt durch die Trägheitsmasse des Getriebes, die die Mittelwalze gegenüber den Lieferwalzen verdreht. Bei den heutigen, sehr schnell laufenden Streckwerken fällt dieser Gesichtspunkt bezüglich der produzierten Längen an Faserband pro Sekunde ins Gewicht.

Eine andere, gegenläufige Entwicklung für den Antrieb von Streckwerken ist gekennzeichnet durch den Einsatz einer "elektrischen Welle" im Streckwerk. Eine charakteristische Lösung für den Einsatz der "elektrischen Welle" ist die DE-OS 29 41 612. Jedes Walzenpaar wird durch einen einzelnen Antrieb direkt angetrieben. Mechanische Getriebe zwischen den Walzenpaaren existieren nicht.

Aufbauend auf diesen Grundgedanken geht die Lösung nach EP 411 379 davon aus, gleichartige Einzelantriebe zu Antriebsgruppen zusammenzufassen. Es existieren somit separate, zueinander unabhängige Antriebsgruppen. Für jede unabhängige Antriebsgruppe eines Verzugsbereiches oder nach Bedarf auch eines Förder- oder Transportabschnittes oder anderer prozeßmäßig gekoppelter Arbeitsstationen ist je ein Einzelantrieb vorzusehen. Das Prinzip der "elektrischen Welle" ist beibehalten. Durch den Einsatz drehwinkelgetreuer Positionsregler soll die Präzision der Antriebe verbessert werden.
Dabei ist es nachteilig, daß die Servomotoren eine hohe elektrische Leistung bei hoher Drehzahlpräzision haben müssen und deshalb sehr teuer sind.
Mit der technischen Lösung nach EP 411 379 wird vorteilhafterweise erreicht, daß durch die Gliederung in eine Haupt- und mindestens eine Hilfsregelung die zentrale Rechnereinheit entlastet wird und die Gefahr des Auftretens großer Spitzen bei der Hauptregelung reduziert wird (EP 411 379, 5. Spalte, 27.-31. Zeile).
Die Lösung kann jedoch nicht verhindern, daß die Antriebsmotore für einzelne Antriebsgruppen untereinander im Drehzahlverhältnis abweichen können. Ursache können z.B. sprunghaft auftretende Fehler im textilen Faserband sein. Die EP 411 379 schlägt deshalb vor, Kontrollverbindungen zwischen den Hilfsreglern zu installieren, um Abweichungen im Drehzahlverhältnis einzelner Antriebsmotoren untereinander erfassen und korrigieren zu können.
Die Lösung nach EP 411 379 ist letztlich sehr kostenaufwendig und teuer, da jeder Einzelantrieb sehr präzise arbeiten muß. Berücksichtigt man die erforderliche, mechanisch abzugebende Leistung, die Größe der Motoren und deren Leistungselektronik, so wird deutlich, daß zusätzliche Probleme hinsichtlich Platzbedarf und spinnsaalgerechter Kühlung der Leistungselektronik auftreten.
Betrachtet man die dynamische Seite der Einzelantriebe, so ist verständlich, daß bei schnellen Lastwechseln oder Laststößen z.B. durch einlaufende Dickstellen des Faserbandes, die Aufrechterhaltung der exakten Drehzahlverhältnisse bzw. Verhinderung von kurzen Drehzahleinbrüchen durch diese Momentanspitzen sehr schwierig ist, wenn teilweise überhaupt nicht machbar ist. Um diese Drehzahleinbrüche mit dem erforderlichen Drehmoment rasch und wirkungsvoll ausgleichen zu können, werden die elektrischen Antriebsmotoren vielfach bezüglich ihres Leistungsbedarfs überdimensioniert.

Einzelantriebe bei dieser "elektrischen Welle" haben bezüglich einer Regelung weiterhin den Nachteil, daß Sollwert-Abweichungen unterschiedliches Gewicht haben. Die Korrektur kleiner Betragsabweichungen beim Sollwert erfordert den Einsatz eines hochwertigen Servoregler im Gegensatz zur Korrektur großer Betragsabweichungen beim Sollwert.

Die Verwirklichung eines Grundverzuges z.B. eines 8-fachen entspricht einem Drehzahlverhältnis zweier Streckwerkswellen von 800 %. Der Sollwert des Umrichters des langsam laufenden Motors ist also nur 1/8 des Sollwertes eines Führungsantriebes. Da sich die Regelgenauigkeit von Antrieben immer auf full scale bezieht, ist in diesem Fall die Genauigkeit des Folgeantriebes nur 1/8 des Führungsantriebes. Damit die Regelgenauigkeit hier nicht erheblich leidet, muß ein teurer Antrieb eingesetzt werden, der eine erheblich höhere Genauigkeit (8-fache) hat als preiswerte Standardantriebe.
Nachteilig ist auch folgender Sachverhalt:
Prozentuale Verzugsänderungen haben eine Änderung des Stellsignales zur Folge, d.h. ein feiner Verzug hat als Äquivalent ein sehr kleines Stellsignal zur Folge. Das ist ein Problem, denn die Genauigkeit der Synchronisation der Drehzahlverhältnisse leidet bei Verwendung sehr kleiner Signalgrößen für das Stellsignal.

Aufgabe der Erfindung ist es, für eine Strecke einen Antrieb einzusetzen, der kostengünstiger ist und zugleich eine höhere Automation und Präzision zur Einstellung der Drehzahlverhältnisse zwischen den Arbeitsorganen erreicht.

Ein wesentliches Merkmal des Verfahrens ist es, daß die zu einem Arbeitsorgan übertragene Antriebsleistung das Resultat aus der Überlagerung von zwei bereitgestellten Antriebsleistungen ist, wobei eine der Antriebsleistungen konstant geliefert wird und die andere Antriebsleistung zugleich wählbar veränderlich geliefert werden kann. Die wählbar veränderliche Antriebsleistung wird der konstanten Antriebsleistung überlagert, so daß eine resultierende Antriebsleistung in dem Maße bereitgestellt ist, um zwischen den Arbeitsorganen konstante Drehzahlverhältnisse zu ermöglichen. Diese Einstellung der erforderlichen, resultierenden Antriebsleistung gegenüber einem Arbeitsorgan erfolgt somit automatisch.

Die gesamte Antriebsleistung gegenüber den Arbeitsorganen einer Strecke ist zwischen einem Hauptmotor und mehreren separaten Motoren aufgeteilt. Die Aufteilung der Antriebsleistung erfolgt so, daß der Hauptmotor eine konstante Antriebsleistung liefert, die den größeren Anteil der gesamten Antriebsleistung darstellt. Alle separaten Motoren, die die wählbar veränderliche Antriebsleistung erbringen, erbringen zusammen den geringeren Anteil der gesamten Antriebsleistung. Ein separater Motor ist mit einem Planeten- bzw. Zykloidengetriebe verbunden und jeweils einem Arbeitsorgan zugeordnet. Vorteilhafterweise ist der separate Motor ein Servomotor.

Da die Antriebsleistung im physikalischen Zusammenhang zu Drehzahl und Drehmoment steht, kann insbesondere über die Drehzahländerung auf Störungen des Verzugs reagiert werden, so daß mittels Drehzahländerung am entsprechenden Arbeitsorgan die erforderlichen Drehzahlverhältnisse zwischen den Arbeitsorganen eingehalten werden können.

Nach dem Verfahren werden im Bezug auf ein einzelnes Arbeitsorgan stets zwei Drehzahlen überlagert, so daß die resultierende Drehzahl an dem jeweiligen Arbeitsorgan wirkt. Verfahrensgemäß wird das Grunddrehzahlverhältnis der einzelnen Arbeitsorgane zueinander durch die Wahl der mechanischen Übersetzungen vom Hauptmotor zum Antriebsrad des Planeten- bzw. Zykloidengetriebes oder durch die Übersetzung innerhalb des Getriebes festgelegt.
Durch die Änderung der Drehzahl und/oder der Drehrichtung der einzelnen Servomotoren wird die für die Arbeitsorgane bereitgestellte Grunddrehzahl durch eine abgesenkte oder erhöhte Drehzahl des Servomotors überlagert, so daß am Arbeitsorgan eine resultierende Drehzahl wirkt. Auf diese Weise ist es möglich, Abweichungen zwischen den Drehzahlverhältnissen der Arbeitsorgane automatisch zu korrigieren und auf das gewünschte Drehzahlverhältnis wieder einzustellen. Da die Servomotoren steuerbar sind, wird von Steuer-Servomotoren gesprochen, die entsprechend der Einfachheit als Servomtoren bezeichnet werden.

Das Übersetzungsverhältnis des Planeten- bzw. Zykloidengetriebes wird so festgelegt, daß der Stellbereich des Servomotors ein Vielfaches des Stellbereiches der Abtriebsdrehzahl des genannten Getriebes ist. Es wird somit erreicht, daß die Genauigkeit der Drehzahlauflösung des Servomotors proportional schlechter sein kann, ohne daß die Gesamtgenauigkeit der Drehzahlstellung leidet. Es ergibt sich der Vorteil, daß ein Servomotor mit schlechterer Auflösung der Drehzahlgenauigkeit verwendet werden kann. Das wirkt sich kostengünstig auf das Antriebskonzept aus, ohne daß die Gesamtgenauigkeit darunter leidet. Das Übersetzungsverhältnis des Planeten- bzw. Zykloidengetriebes ist so festgelegt, daß die Auflösung der Genauigkeit für das Stellsignal des Servomotors im proportionalen Verhältnis schlechter sein darf, als bei Einzelantrieben, ohne daß die Gesamtgenauigkeit darunter leidet. Das trifft auch zu für die Genauigkeit des Sollwertes.

Das Übersetzungsverhältnis des Planeten- bzw. Zykloidengetriebes ist weiterhin so festgelegt, daß Laständerung oder schnelle Laständerung eine zum Übersetzungsverhältnis proportional verringerte Rückwirkung auf die Drehzahl des Servomotors haben. Es ergibt sich daraus der Vorteil, daß weniger dynamische Servomotoren und somit kostengünstigere Servomotoren eingesetzt werden können.

Ein erfinderisches Merkmal der Vorrichtung ist, daß die mechanische Getriebekopplung aller Arbeitsorgane untereinander zugleich gekoppelt ist mit einzelnen, separaten Motoren für alle Arbeitsorgane.

Vorrichtungsgemäß kann jedes Arbeitsorgan mit der Abtriebswelle des entsprechenden Planeten- bzw. Zykloidengetriebes gekoppelt werden. Dagegen sind die entsprechenden Antriebswellen der Planeten- bzw. Zykloidengetriebe mit einem einzelnen, zentralen Hauptmotor verbunden. Die Welle für das Sonnenrad der Planeten- bzw. Zykloidengetriebe ist jeweils mit einem separaten Antrieb verbunden. Der separate Antrieb kann ein Servomotor sein, der entsprechend seiner Funktion in der Vorrichtung als Steuer-Servomotor arbeitet. Ein Signal von einer Regulierung zur Faserbanddicke kann ein Stellsignal für den jeweiligen Steuer-Servomotor auslösen. Der Steuer-Servomotor kann daraufhin Drehzahl und/oder Drehrichtung ändern.

Durch die Vorrichtung wird das Grunddrehzahlverhältnis der einzelnen Arbeitsorgane zueinander festgelegt. Die Festlegung erfolgt durch die Wahl der mechanischen Übersetzungen vom Hauptmotor zum Antriebsrad des Planeten- bzw. Zykloidengetriebes oder der Übersetzung innerhalb des Getriebes.

Der Stellbereich der Grunddrehzahlverhältnisse wird von den Steuer-Servomotoren verwirklicht. Das hat den Vorteil, daß jeder Servomotor in seinem full scale Bereich arbeiten kann. Die exakte Grundübersetzung wird durch die Auslegung des mechanischen Übertriebes gelöst, die eine präzise Synchronität gewährleistet. Das hat den Vorteil, daß auch bei Drehzahleinbrüchen oder Laststößen das eingestellte Drehzahlverhältnis erhalten bleibt, da sich die Störung auf alle Walzenpaare gleichzeitig und in gleichem Maße auswirkt.

Ein weiteres Merkmal ist, daß der Hauptmotor die zu leistende Grundlast zum Betrieb des Streckwerkes erbringt, wobei die Grunddrehzahlverhältnisse mechanisch vorgegeben sind. Die Servomotoren mit ihrer wesentlich geringeren Antriebsleistung werden benutzt, um
- Drehzahleinbrüche sofort präzise auszugleichen,
- das Grunddrehzahlverhältnis in relativ weiten Grenzen stufenlos verstellbar und fixierbar zu machen.

Da jedes Planeten- oder Zykloidengetriebe einen eigenen Servomotor besitzt, wird die Antriebsleistung jedes einzelnen Walzenpaares gestaffelt in eine Antriebsleistung, die der Hauptmotor leistet und einen Anteil, den der Servomotor des Planeten- oder Zykloidengetriebes zu leisten hat. Das hat spürbar günstige Auswirkungen auf die Dimensionierung und die Kostensituation der einzusetzenden Elektromotoren. Der Leistungsanteil für den Servomotor wird relativ gering im Vergleich zum Hauptmotor, wobei der Hauptmotor ein Asynchronmotor sein kann. Der benötigte Servomotor ist deshalb (auch im Vergleich zur klassischen "elektrischen Welle") äußerst kostengünstig und führt zu einer Kostenreduzierung beim Antrieb des Streckwerkes.

Infolge der Kopplung der Servomotoren mit den Planeten- bzw. Zykloidengetriebe werden geringere dynamische Anforderungen an die Servomotoren notwendig, da Laststöße von der Trägheitsmasse des Planeten- bzw. Zykloidengetriebes abgefangen werden. Die Kosten für die erforderlichen Planeten- bzw. Zykloidengetriebe können ebenfalls gering gehalten werden, da die zu übertragenden Leistungen relativ klein sind und der Markt sehr preisgünstige und trotzdem robuste und betriebssichere Getriebe mit hohem Wirkungsgrad anbietet.

Durch die Untersetzung der Drehzahl des Servomotors zur Abtriebsdrehzahl des Planeten- bzw. Zykloidengetriebes wird die Auflösung verbessert, d.h. Drehzahlfehler, Überschwinger, Welligkeiten usw. der Servomotor-Drehzahl werden entsprechend dem Übersetzungsverhältnis abgeschwächt. Dies führt zu einer hohen Präzision im Drehzahlverhalten, trotz Einsatz von Servomotoren geringer Genauigkeitsklasse.

Durch Einsetzen der Haltebremse an den Servomotoren, kann die Maschine mit Grundübersetzung auch dann noch betrieben werden, wenn der Servomotor fehlerhaft wäre. Durch die Bremse ist weiterhin eine mechanische Synchronität im Stillstand des Streckwerkes gegeben, wodurch z.B. Störungen in der Gleichmäßigkeit der Faserbänder durch Entspannen der gestreckten Faserverbände im Stillstand verhindert werden.

Die vorliegende Erfindung erbringt eine Kosteneinsparung und erhöht dennoch die Präzision im Drehzahlverhältnis und garantiert eine hohe Betriebssicherheit. Durch die erreichbare Präzision der Synchronität im Drehzahlverhalten zwischen den Arbeitsorganen kann der Automatisierungsgrad sehr weit getrieben werden, beispielsweise ist an einem Streckwerk ein Verzug problemlos einstellbar bei dem das Drehzahlverhältnis zweier aufeinanderfolgender Walzenpaare sehr gering ist.

Ein Ausführungsbeispiel der Erfindung ist in den Zeichnungen dargestellt und im folgenden näher beschrieben. Es zeigen
- Figur 1: Vorrichtung zur automatischen Verzugseinstellung an einem Streckwerk
- Figur 2: einzelnes Planeten- bzw. Zykloidengetriebe
- Figur 3: Strecke mit Arbeitsorganen
Es folgt die Erläuterung der Erfindung anhand der Zeichnungen nach Aufbau und nach Wirkungsweise der dargestellten Erfindung. Der Verzug wird maßgeblich bestimmt durch die Drehzahlverhältnisse zwischen den Walzenpaaren eines Streckwerkes.

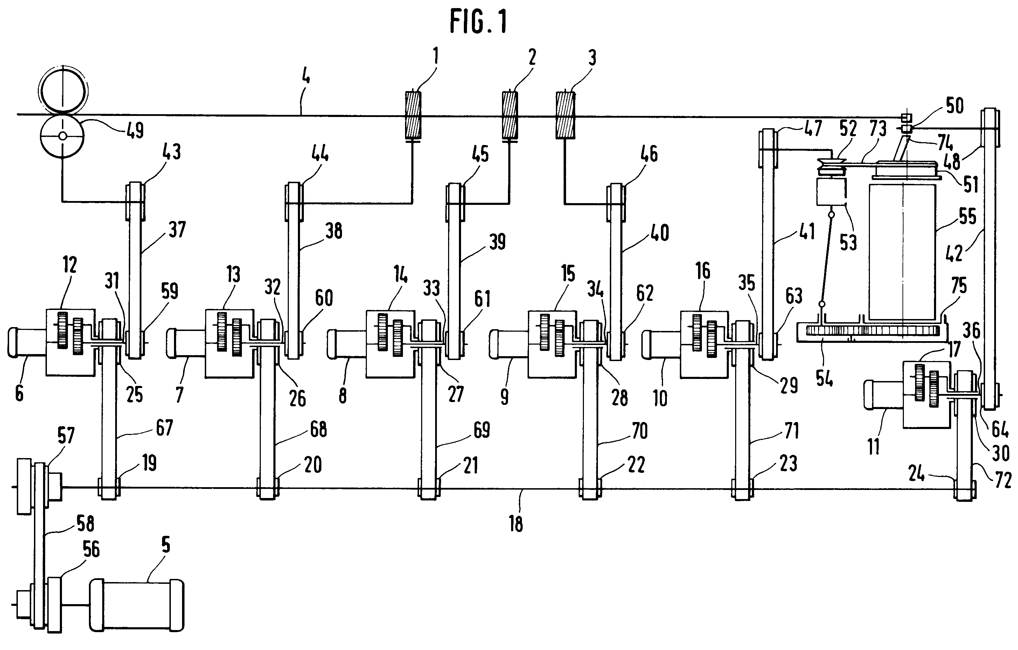

Figur 1 zeigt eine Vorrichtung zur automatischen Verzugseinstellung an einem Streckwerk im Zusammenwirken mit einem Tastwalzenpaar, dem Drehteller und dem Kannenteller. Das Faserband 4 wird vor dem Eingang des Streckwerkes durch das Tastwalzenpaar 49 hindurchgefördert. Das Tastwalzenpaar 49 ermittelt die Faserbanddicke. Nach der schematischen Darstellung gelangt das Faserband 4 zu dem Eingangswalzenpaar 1 weiter zu dem Mittelwalzenpaar 2 und dem Lieferwalzenpaar 3. Aus Gründen der Übersichtlichkeit ist immer nur die untere Walze dargestellt, die jeweils primär angetrieben wird. Die drei Walzenpaare (1, 2, 3) bilden ein Vorverzugsfeld und ein Hauptverzugsfeld. Das Faserband 4 wird weiter gefördert zu einem Kalanderwalzenpaar 50, gelangt von dort in den Bandführungskanal 74 und wird über den Drehteller 51 in einer Kanne 55 abgelegt. Die Kanne 55 steht auf einem Kannenteller 75, der die Kanne um die eigene Achse dreht.

Für die Arbeitsweise des Streckwerkes sind die Drehzahlverhältnisse zwischen Eingangswalzenpaar 1 und Mittelwalzenpaar 2 sowie zwischen Mittelwalzenpaar 2 und Lieferwalzenpaar 3 entscheidend. In diesem Zusammenhang müssen aber auch die Drehzahlverhältnisse gewährleistet sein zwischen Tastwalzenpaar 49 und Eingangswalzenpaar 1 sowie das Drehzahlverhältnis zwischen Lieferwalzenpaar 3 und Kalanderwalzenpaar 50. Auch das Drehzahlverhältnis des Drehtellers 51 bzw. des Kannentellers 75 zum Kalanderwalzenpaar 50 ist zu beachten.

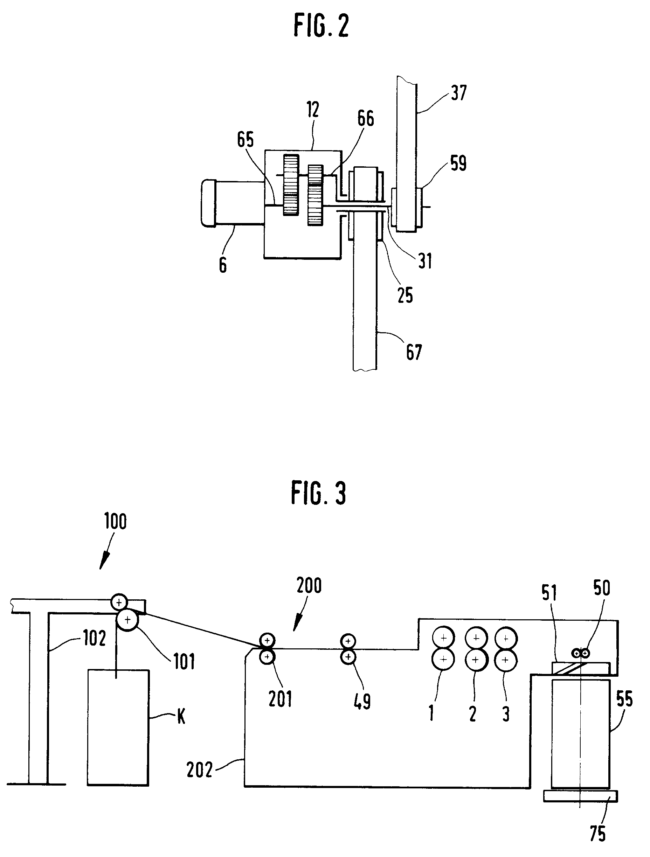

Nicht dargestellt in Figur 1 sind der Zuführtisch mit seinem Walzenpaar sowie das Zuführgestell mit den entsprechenden Walzenpaaren. Diese Arbeitsorgane können ebenfalls Drehzahlverhältnisse zu den anderen benannten Arbeitsorganen bilden. Sie können deshalb in die nachfolgende Betrachtung einbezogen werden, ohne das sie audrücklich erwähnt werden müßten. Zum erweiterten Verständnis zeigt Figur 3 schematisiert ein Zuführgestell 100 und einen Zuführtisch 200 in deren Zuordnung zu einem Tastwalzenpaar 49, zu den Walzenpaaren 1, 2, 3 eines Streckwerkes, dem Drehteller 51 und dem Kannenteller 75. Das Zuführgestell 100 hat entsprechend der Anzahl der vorgelegten Kannen K am Gestellrahmen 102 drehbar gelagerte Walzenpaare wie beispielsweise das Walzenpaar 101 (im vorliegenden Beispiel ist nur ein Walzenpaar bei einer Kanne K dargestellt, üblicherweise sind es 6 bis 8 Walzenpaare bei 6 bis 8 Kannen K), die von einem nicht dargestellten Antrieb angetrieben werden können, um aus den Kannen K Faserband zu fördern in Richtung Zuführtisch 200. Der Zuführtisch 200 hat üblicherweise ein Walzenpaar 201, das die einlaufenden Faserbänder erfaßt. Dieses Walzenpaar 201 ist vom Antrieb antreibbar. Nach diesem Walzenpaar werden die Faserbänder doubliert und als ein Faserband 4 dem Tastwalzenpaar 49 zugeführt. Als Arbeitsorgane einer Strecke werden definiert die Walzenpaare am Zuführgestell, das oder die Walzenpaare auf dem Zuführtisch der Strecke, das Tastwalzenpaar, die Walzenpaare des Streckwerkes, das Kalanderwalzenpaar, der Drehteller, der Kannenteller. Diese Aufzählung ist korrigierbar um jene Arbeitsorgane die durch Ergänzung oder Modifizierung an der Strecke hinzukommen. Beispielsweise wird beim Einsatz von Flachkannen der Kannenteller ersetzt durch eine Flachkannenchangierung.

Die nachfolgende Betrachtung gehört zu Figur 1. Ein Hauptmotor 5, der ein kostengünstiger Drehstrom-Asynchronmotor sein kann, liefert über Stufenscheibe 56, Riemen 58 und Stufenscheibe 57 seine Antriebsleistung auf die Welle 18. Auf der Welle 18 sind die Riemenscheiben 19,20,21,22,23,24 angeordnet. Um andere Größenordnungen der Kraftübertragung zu erbringen, können diese Riemenscheiben auch durch Riemenscheiben anderer oder verschiedener Dimensionierung ersetzt werden. Das trifft auf alle dargestellten Riemenscheiben zu. Über die Riemen 67,68,69,70,71,72 wird die Antriebsleistung weiter auf die Riemenscheiben 25, 26, 27, 28, 29 und 30 geliefert. Letztere Riemenscheiben sind auf der Antriebswelle der Planeten- bzw. Zykloidengetriebe befestigt. Die entsprechenden Einzelheiten dazu zeigt Figur 2.

Figur 2 ist ein Detailausschnitt aus Figur 1 und zeigt, daß die Antriebsleistung über den Riemen 67 auf die Riemenscheibe 25 übertragen wird, die mit der Antriebswelle des Planeten- bzw. Zykloidengetriebes 12 gekoppelt ist. Die Antriebswelle ist im vorliegenden Fall die Stegwelle 66. Die Stegwelle 66 überträgt die Antriebsleistung über die Zahnräder auf die Abtriebswelle 31. Auf der Abtriebswelle 31 ist die Riemenscheibe 59 befestigt, die über den Riemen 37 die Antriebsleistung weitergibt auf Riemenscheibe 43, wobei deren Welle mit dem Tastwalzenpaar 49 gekoppelt ist. Der Servomotor 6 (der einem Steuer-Servomotor entspricht) ist mit der Welle des Sonnenrades 65 gekoppelt, so daß die Antriebsleistung des Steuer-Servomotors 6 der Antriebsleistung, die von der Antriebswelle 66 kommt, überlagert werden kann. Figur 2 zeigt, daß insbesondere die über den Riemen 67 auf die Antriebswelle 66 gelieferte Drehzahl überlagert werden kann durch die Drehzahl des Servomotors 6, die über die Welle des Sonnenrades 65 geliefert wird. An der Abtriebswelle 31 wird eine resultierende Drehzahl abgenommen. Der Servomotor 6 kann nicht nur seine eigene Drehzahl kontinuierlich ändern, sondern er kann auch die Drehrichtung ändern. Dies macht sich in einer Drehzahlerhöhung oder Drehzahlverringerung an der Abtriebswelle 31 bemerkbar.

Dieses Prinzip gilt auch in der Funktionsweise zwischen Servomotor 7 und Planeten- bzw. Zykloidengetriebe 13, zwischen Servomotor 8 und Planeten- bzw. Zykloidengetriebe 14, zwischen Servomotor 9 und Planeten- bzw. Zykloidengetriebe 15, zwischen Servomotor 10 und Planeten- bzw. Zykloidengetriebe 16 und zwischen Servomotor 11 und Planeten- bzw. Zykloidengetriebe 17.

Folglich wird die Antriebsleistung auch übertragen von den Riemenscheiben 60,61,62,63 und 64, über die Riemen 38,39,40,41 und 42. Von den Riemenscheiben 44,45,46 erfolgt die Übertragung weiter auf das Eingangswalzenpaar 1, das Mittelwalzenpaar 2 und das Lieferwalzenpaar 3.

Von der Riemenscheibe 48 wird die Antriebsleistung auf das Kalanderwalzenpaar 50 übertragen. Die Riemenscheibe 47 überträgt die Antriebsleistung auf ein Riemenrad 52, wobei über den Riemen 73 der Drehteller 51 angetrieben wird. Zugleich wird über das Getriebe 53 und ein Getriebe 54 der Kannenteller 75 um seine Achse gedreht, so daß die Kanne 55 um ihre eigenen Achse rotiert.

Die gesamte Antriebsleistung gegenüber den dargestellten Walzenpaaren eines Streckwerkes ist zwischen einem Hauptmotor 5 und mehreren Servomotoren 6, 7, 8, 9, 10, 11 (die einem Steuer-Servomotor entsprechen) partiell aufgeteilt. Die Aufteilung der Antriebsleistung erfolgt so, daß der Hauptmotor 5 eine konstante Antriebsleistung liefert, die den größeren Anteil der gesamten Antriebsleistung darstellt. Die Servomotoren 6, 7, 8, 9, 10 und 11, die die wählbar veränderliche Antriebsleistung erbringen, erbringen zusammen den geringeren Anteil der gesamten Antriebsleistung.

Das hat spürbar günstige Auswirkungen auf die Dimensionierung und die Kostensituation der einzusetzenden Elektromotoren. Der Leistungsanteil für die Servomotoren 6,7,8,9,10 und 11 wird relativ gering im Vergleich zum Hauptmotor 5. Die benötigten Servomotoren sind deshalb (auch im Vergleich zur klassischen "elektrischen Welle") äußerst kostengünstig und führen zu einer Kostenreduzierung für den Antrieb des Streckwerks.

Infolge der Kopplung der Servomotoren 6,7,8,9,10,11 mit den Planeten- bzw. Zykloidengetriebe 12,13,14,15,16,17 werden geringere dynamische Anforderungen an den einzelnen Servomotor notwendig, da Laststöße von der Trägheitsmasse des jeweiligen Planeten- bzw. Zykloidengetriebes abgefangen werden. Die Kosten für die erforderlichen Planeten- bzw. Zykloidengetriebe 12,13,14,15,16,17 können ebenfalls gering gehalten werden, da die zu übertragenden Leistungen relativ klein sind und der Markt sehr preisgünstige und trotzdem robuste und betriebssichere Getriebe mit hohem Wirkungsgrad anbietet.

Wie Figur 1 weiterhin zeigt, wird der Stellbereich des Grundverzuges über die Servomotoren 7,8,9 in Verbindung mit den Planeten- bzw. Zykloidengetriebe 13,14 und 15 extern verwirklicht. Die Servomotoren greifen steuernd ein und werden deshalb als Steuer-Servomotoren bezeichnet. Diese Gestaltung des Stellbereiches hat den Vorteil, daß jeder Servomotor in seinem full scale Bereich arbeiten kann. Die exakte Grundübersetzung wird durch die Auslegung des mechanischen Übertriebes gelöst. Das wiederum hat den Vorteil, daß auch bei Drehzahleinbrüchen oder Laststößen das eingestellte Drehzahlverhältnis erhalten bleibt, da sich die Störung auf alle Walzenpaar gleichzeitig und in gleichem Maße auswirkt.

Wie Figur 2 detailliert erkennen läßt, wird durch die Untersetzung der Drehzahl des Servomotors zur Abtriebsdrehzahl des Planetengetriebes die Auflösung verbessert, d.h. Drehzahlfehler, Überschwinger, Welligkeit usw. der Drehzahl des Servomotors 6 werden entsprechend dem Übersetzungsverhältnis von 12 abgeschwächt. Dies führt zu einer hohen Präzision im Drehzahlverhalten, trotz Einsatz von Servomotoren geringerer Genauigkeitsklasse.

Durch die erreichbare Präzision im Drehzahlverhalten zwischen den Walzenpaaren kann der Automatisierungsgrad sehr weit getrieben werden. Die Verstellbarkeit der Drehzahlen bzw. der Drehzahlverhältnisse der Walzenpaare ist währen des Betriebes automatisch möglich. Als vorteilhaft erweist sich auch die Tatsache, daß an der Strecke ein Verzug problemlos einstellbar ist, bei dem das Drehzahlverhältnis zweier aufeinanderfolgender Walzenpaare sehr gering gehalten ist. Das war in der Vergangenheit unter anderem ein Problem.

## Patentansprüche

1. Verfahren zur automatischen Einstellung der Drehzahlverhältnisse zwischen Arbeitsorganen einer Strecke, wobei die Antriebsleistung über Drehzahl und Drehmoment auf die Arbeitsorgane wirkt, dadurch gekennzeichnet, daß für ein Arbeitsorgan zwei einzelne Antriebsleistungen bereitgestellt werden, wobei eine der Antriebsleistungen in konstanter Größe geliefert wird und die andere Antriebsleistung in zugleich wählbar veränderlicher Größe geliefert wird und die wählbar veränderliche Antriebsleistung der konstanten Antriebsleistung überlagert wird, so daß eine aus der Überlagerung resultierende Antriebsleistung an das Arbeitsorgan geliefert wird, die das Drehzahlverhältnis zu anderen Arbeitsorganen automatisch einstellbar macht.

2. Verfahren nach Anspruch 1, dadurch gekennzeichnet, daß die gesamte Antriebsleistung gegenüber den Walzenpaaren (1, 2, 3, 49, 50) als Arbeitsorgane einer Strecke und/oder einem Drehteller (51) als Arbeitsorgan und/oder Kannenteller (75) als Arbeitsorgan zwischen einem Hauptmotor (5) und mehreren Steuer-Servomotoren (6, 7, 8, 9, 10, 11) aufgeteilt wird.

3. Verfahren nach Anspruch 2, dadurch gekennzeichnet, daß der Hauptmotor (5) eine konstante Antriebsleistung liefert, die der größere Anteil der gesamten Antriebsleistung ist.

4. Verfahren nach Anspruch 2, dadurch gekennzeichnet, daß alle Steuer-Servomotoren (6, 7, 8, 9, 10, 11) wählbar veränderliche Antriebsleistungen liefern, die zusammen den geringeren Anteil der gesamten Antriebsleistung bilden.

5. Verfahren nach einem oder mehreren der Ansprüche 1 bis 4, dadurch gekennzeichnet, daß das Grunddrehzahlverhältnis der einzelnen Walzenpaare (1, 2, 3, 49, 50) und/oder des Drehtellers (51) und/oder Kannentellers (75) zueinander durch die Wahl der mechanischen Übersetzungen vom Hauptmotor (5) zur Antriebswlle (66) aller Planeten- oder Zykloidengetriebe oder durch die Übersetzung innerhalb des Getriebes festgelegt ist.

6. Verfahren nach einem oder mehreren der Ansprüche 1 bis 6, dadurch gekennzeichnet, daß durch Änderung der Drehzahlen und/oder der Drehrichtungen der Steuer-Servomotoren (6, 7, 8, 9, 10, 11) die Drehzahlen der Walzenpaare (1, 2, 3, 49, 50) und/oder vom Drehteller (51) und/oder vom Kannenteller (75) verändert werden können, so daß deren Drehzahlverhältnisse automatisch einstellbar sind.

7. Verfahren nach Anspruch 6, dadurch gekennzeichnet, daß das Übersetzungsverhältnis des Planeten- oder Zykloidengetriebes (12, 13, 14, 15, 16, 17) so gewählt ist, daß der Stellbereich des Steuer-Servomotors (6, 7, 8, 9, 10, 11) ein Vielfaches des Stellbereiches der Abtriebsdrehzahl ist, so daß die Genauigkeit der Drehzahlauflösung des Steuer-Servomotors proportional schlechter sein darf.

8. Verfahren nach Anspruch 6, dadurch gekennzeichnet, daß das Übersetzungsverhältnis des Planeten- oder Zykloidengetriebes (12, 13, 14, 15, 16, 17) so gewählt wird, daß die Auflösung der Genauigkeit des Stellsignals für den Steuer-Servomotor proportional schlechter sein darf als bei ausschließlich motorischen Einzelantrieben.

9. Verfahren nach Anspruch 6, dadurch gekennzeichnet, daß das Übersetzungsverhältnis des Planeten- oder Zykloidengetriebes (12, 13, 14, 15, 16, 17) so gewählt ist, daß Laständerungen und/oder schnelle Laständerungen eine proportional zum Übersetzungsverhältnis verringerte Rückwirkung auf die Drehzahl des Steuer-Servomotors haben.

10. Vorrichtung zur automatischen Einstellung der Drehzahlverhältnisse an einer Strecke, wobei die Antriebsleistung auf Arbeitsorgane übertragen wird, dadurch gekennzeichnet, daß einzelne Arbeitsorgane einer Strecke mit einer Abtriebswelle eines Planeten- oder Zykloidengetriebes verbunden ist, wobei die Antriebe der Planeten- oder Zykloidengetriebe mit einem einzelnen zentralen Hauptmotor (5) verbunden sind und die Wellen des Sonnenrades vom Planeten- oder Zykloidengetriebe jeweils mit einem separaten Motor gekoppelt sind.

11. Vorrichtung nach Anspruch 10, dadurch gekennzeichnet, daß jedes der Walzenpaare (1, 2, 3, 49, 50) als Arbeitsorgan und/oder der Drehteller (51) als Arbeitsorgan und/oder der Kannenteller (75) als Arbeitsorgan mit der Abtriebswelle (31, 32, 33, 34, 35, 36) eines Planeten- oder Zykloidengetriebes (12, 13, 14, 15, 16, 17) verbunden ist, wobei die Antriebe der Planeten- oder Zykloidengetriebe mit einem einzelnen zentralen Hauptmotor (5) verbunden sind und die Wellen des Sonnenrades vom Planeten- oder Zykloidengetriebe jeweils mit einem separaten Motor (6, 7, 8, 9, 10, 11) gekoppelt sind.

12. Vorrichtung gemäß Anspruch 10, dadurch gekennzeichnet, daß ein separater Motor ein Steuer-Servomotor ist.

13. Vorrichtung nach einem oder beiden der Ansprüche 10 bis 11, dadurch gekennzeichnet, daß ein Grunddrehzahlverhältnis der einzelnen Walzenpaare zueinander festgelegt ist durch die Wahl der mechanischen Übersetzung vom Hauptmotor (5) zur Antriebswelle der Planeten- oder Zykloidengetriebe.

14. Vorrichtung nach einem oder mehreren der Ansprüche 10 bis 12, dadurch gekennzeichnet, daß durch Änderung der Drehzahlen und/oder der Drehrichtungen der separaten Motoren (6, 7, 8, 9, 10, 11) die Drehzahlen der Walzenpaare (1, 2, 3, 49, 50) und/oder vom Drehteller (51) und/oder vom Kannenteller (75) veränderbar werden, so daß deren Drehzahlverhältnisse automatisch einstellbar sind.
